# EUROPÄISCHE PATENTSCHRIFT

(11) **EP 1 571 228 B1**
(45) Veröffentlichungstag und Bekanntmachung des Hinweises auf die Patenterteilung: **14.02.2007**
(21) Anmeldenummer: 05003832.2
(22) Anmeldetag: 23.02.2005
(51) Int. Cl.: C22C 27/02

(54) **Hochtemperaturbeständiger Niob-Draht**
High temperature resistant niobium wire
Cable en Nb résistant à hautes temperatures

(30) Priorität: 04.03.2004 DE 102004011214
(43) Veröffentlichungstag der Anmeldung: 07.09.2005
(73) Patentinhaber: W.C. Heraeus GmbH, 63450 Hanau (DE)
(72) Erfinder: Spaniol, Bernd, 63546 Hammersbach (DE)
(74) Vertreter: Kühn, Hans-Christian

(56) Entgegenhaltungen:
- WO-A-20/04003949
- US-A- 6 165 623
- US-B1- 6 375 704

## Beschreibung

Die Erfindung betrifft einen hochtemperaturbeständigen Niob-Draht, ein Verfahren zu seiner Herstellung und seine Verwendung zum Anschluss an Niob- oder Nioboxid- oder Tantal-Kondensatoren.

Zum elektrischen Anschluss von Metallpulver-Kondensatoren werden Drähte aus Refraktärmetallen verwendet. Durch den Einsatz gröberer und damit billigerer Nb-Pulver bei der Herstellung von Nb-Kondensatoren werden mittlerweile Sintertemperaturen von > 1400°C verwendet. In der Regel halten Tantal-Drähte diesen höheren Temperaturen stand. Allerdings hat Tantal gegenüber Niob etwa die doppelte Dichte, was zu hohem Materialverbrauch führt. Der fertige Kondensator, dessen Pulvermaterial im wesentlichen aus Niob besteht, als auch Fertigungsabfälle von gesinterten Rohlingen können wirtschaftlich nicht vom Tantal getrennt werden, um das Niob wieder einem Recyclingprozess zuzuführen. Niobdrähte würden dieses Problem lösen. Zudem ist der Tantalpreis starken Marktfluktuationen ausgesetzt, so dass die Kosten für das Vormaterial schwierig zu berechnen und zu steuern sind. Insgesamt ist es daher erwünscht, ein preisgünstiges Ersatzmaterial auf Niob-Basis zur Verfügung zu haben. Wegen des stabilen Preises von Niob als Vormaterial wäre auch der Einsatz von Niob-Anschlussdrähten bei Tantal-Kondensatoren erwünscht.

Für undotiertes Nb sind Anwendungen als Lotwerkstoff für Ta und W bis 1600°C bekannt (Werner Espe, Werkstoffkunde der Hochvakuumtechnik. Bd. 1. Metalle und metallisch leitende Werkstoffe, VEB Dt. Verl. d. Wissenschaften, 1959). Bei dieser Anwendung ist jedoch weder eine Feinkornstabilität noch eine Stabilität gegen Versprödung und Bruch unter "Hin- und Her-Biegebelastung" gefordert.

Niob-Drähte wurden auch zum Anschluss von Pulveranoden empfohlen. US 6,358,625 B1 beschreibt beispielsweise Anodendrähte aus Niob oder Tantal, die zur Verbesserung der Haftung so mit Sauerstoff behandelt werden, dass sich eine Anreicherung an der Oberfläche in der Größenordnung von 35 Atom% in einer Stärke von etwa 50 nm ergibt. Normalerweise enthalten Niob- und Tantal-Drähte nur geringe Mengen von Sauerstoff. Für Tantal werden Sauerstoffgehalte von 50-600 µg/g angegeben. Die Oberflächenanreicherung wirkt sich nicht auf die allgemeinen Eigenschaften wie Leitfähigkeit aus, erhöht aber die Haftung. Es werden Sintertemperaturen um 1250 °C angegeben. O-dotierte Nb-Drähte, wie z.B. in der anhängigen Anmeldung DE 103 04 756 beschrieben, haben ihre Einsatzgrenze bei ca. 1300°C.

Es kommt daher technisch darauf an, ein geeignetes Material auf Niob-Basis zu finden, das Einsatztemperaturen über 1400°C ohne Grobkornbildung übersteht und gleichzeitig vergleichbare elektrische Eigenschaften wie reines Nb aufweist. Das Material sollte außerdem nicht verspröden oder brechen, um die Biegeprozesse während der Kondensatorherstellung zu überstehen.

Es wurde gefunden, dass überraschenderweise schon geringe Beimengungen von Phosphor einen erheblichen Einfluss auf die Rekristallisationstemperatur und auf den Beginn der Grobkornbildung und dem Fortschreiten der Grobkornbildung bei Niob ausüben.

Mit P dotiertes Nb zeigt bei einer Glühung 1400°C/20 min eine Korngröße von ASTM 9, vergleichbare Korngröße wird bei O dotiertem Nb bei 1200°C erreicht, bei nicht dotiertem Nb bei 900°C. Eine merkliche Kornvergröberung tritt bei NbP erst bei Temperaturen über 1600°C ein.

Bei 1600°C werden noch Korngrößen von ASTM 5 erreicht.

Mit dem erfindungsgemäßen Material ergibt sich eine universelle Einsatzmöglichkeit von Nb-Drähten bei Nb-Kondensatoren. Da das Material auch bis 1600°C noch keine massive Grobkornbildung zeigt und nicht versprödet, besteht zudem die Einsatzmöglichkeit bei Ta-Kondensatoren. Das ist besonders bei den kleineren Typen interessant, da dort die Ta-Drahtkosten erheblich zu den Kosten beitragen.

Die Dotierung des Niob erfolgt z.B. während des
- Elektronenstrahlschmelzen durch Zugabe von P oder P-haltigen Vorlegierungen oder
- Lichtbogenschmelzen durch Zugabe von P oder P-haltigen Vorlegierungen oder
- der Sinterblockherstellung aus Nb-Pulver durch Zugabe von P oder P-haltigen Vorlegierungen oder
- der Sinterblockherstellung aus mit bereits P dotiertem Nb-Pulver.

Die entstehende P-haltige Legierung kann bei Raumtemperatur zu Draht mit Durchmessern von 0,15 bis 0,4 mm verarbeitet werden. Die Drähte werden bevorzugt als Anschlussdrähte in Niob- oder Nioboxid- oder Tantal-Kondensatoren verwendet. Solche Kondensatoren werden aus metallischem Pulver hergestellt. Nach dem Sintern (mit dem Draht zusammen) wird das Metall an der Oberfläche "formiert", d.h. anodisch oxidiert, damit eine extrem dünne Nb₂O₅-Schicht bwz. Ta₂O₅ als Dielektrikum gebildet wird.

Das folgende Beispiel erläutert die Erfindung näher, ohne sie zu beschränken.

Ein Niob-Schmelzblock wird unter homogener Zugabe einer ca. 10% P enhaltenden Vorlegierung durch Elektronenstrahlschmelzen mit P dotiert. Es ergibt sich eine Niob-Legierung mit P-Gehalten von 100 bis 2000 µg/g. Die so erzeugte Niob-Legierung wird bei Raumtemperatur zu Drähten im Durchmesserbereich von 0,15 bis 0,4 mm gezogen.

Mittels Glühversuchen, die den eigentlichen Sinterprozess bei der Kondensatorenherstellung simulieren, kann die Hochtemperaturtauglichkeit dieser Legierung nachgewiesen werden. Als Vergleichsproben dienen Nb ("Nb-Standard") und Nb mit 3000 µg/g O ("NbO").

Die Ergebnisse sind in der folgenden Tabelle zusammengefasst:

| Nb Qualität: | Glühtemperatur : | resultierende Korngröße : nach ASTM | Biegezahl hin und her |
|---|---|---|---|
| Nb Standard | 900°C | 7 | > 10 |
| Nb Standard | 1000°C | 4 | 5 |
| NbO | 900°C | 12 | >10 |
| NbO | 1200°C | 7 | 8 |
| NbO | 1300°C | 4 | 2 |
| NbP | 900°C | Verformungsgefüge | nicht ermittelt |
| NbP | 1200°C | 9 | >40 |
| NbP | 1300°C | 9 | >40 |
| NbP | 1400°C | 9 | >40 |
| NbP | 1500°C | 8 | >40 |
| NbP | 1600°C | 7 | >20 |
| NbP | 1700°C | 4 | >20 |
| NbP | 1800°C | | 15 |
| NbP | 1900°C | | 12 |
| NbP | 2000°c | | 12 |

Die Versuche zeigen eine Kornstabilität bis etwa 1500°C, ab 1600°C beginnt eine Kornvergröberung. Die mechanischen Eigenschaften (Biegezahl) sind nach einer Sinterung bei 1600° hinreichend um eine problemlose Verarbeitung bei Kondensatorenherstellung zu gewährleisten.

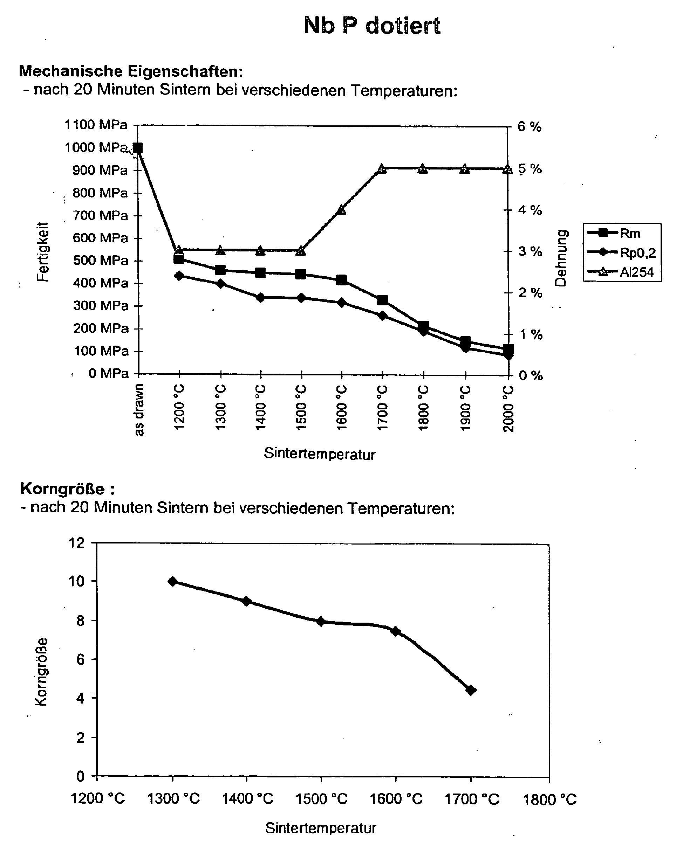

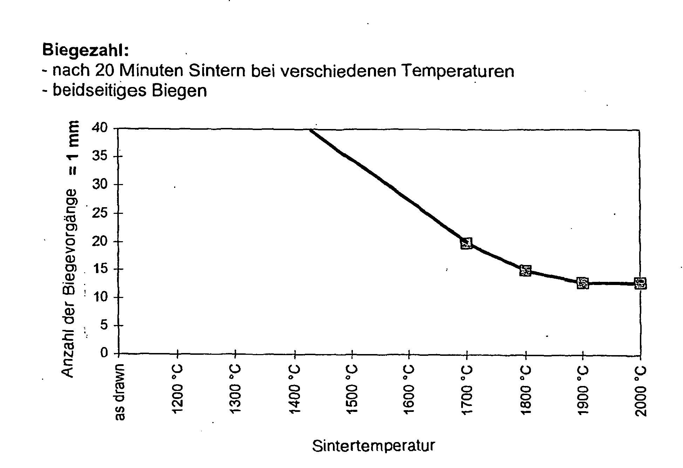

Die Figuren 1 und 2 zeigen die mechanischen Eigenschaften Festigkeit und Dehnung, die Korngröße (ASTM) und die Biegezahl des erfindungsgemäßen P-dotierten Niobs als Draht mit 0,24 mm Durchmesser nach 20 minütigem Sintern bei verschiedenen Temperaturen. An diesem Beispieldraht liegt der P-Gehalt bei 350 µg/g.

(Rm = Zugfestigkeit; Rp0,2 = 0,2 % Dehngrenze; Al254 = Bruchdehnung bezogen auf eine Ausgangslänge von 254 mm).

## Patentansprüche

1. Hochtemperaturbeständiger Niob-Draht, **dadurch gekennzeichnet, dass** er mit Phosphor angereichert ist, wobei der Phosphor-Gehalt von 50 bis 2000 µg/g beträgt.

2. Verfahren zur Herstellung von mit Phosphor angereichertem hochtemperaturbeständigen Niob-Draht, **dadurch gekennzeichnet, dass**
a) Niob unter Zugabe von P oder P-haltigen Vorlegierungen durch Elektronenstrahl- oder Lichtbogenschmelzen oder Sintern mit P dotiert wird, oder dass
b) bereits mit P dotiertes Nb-Pulver gesintert wird,
und dass aus dem erhaltenen Material ein Draht gezogen wird,
dessen Phosphor-Gehalt von 50 bis 2000 µg/g beträgt.

3. Verfahren nach Anspruch 2, wobei der gezogene Draht Durchmesser von 0,2 bis 0,4 mm aufweist.

4. Verfahren nach Anspruch 2, wobei das Ziehen des Drahts bei Raumtemperatur erfolgt.

5. Verwendung von mit Phosphor angereichertem Niob-Draht gemäß Anspruch 1 als Anschlussdraht von Niob- oder Nioboxid- oder Tantal-Kondensatoren.

## Claims

1. A temperature-resistant niobium wire, **characterized in that** it is enriched with phosphorus, the phosphorus content being from 50 to 2000 µg/g.

2. Process for the preparation of high temperature-resistant niobium wire enriched with phosphorus, **characterized in that**
a) niobium is doped with P with addition of P or P-containing pre-alloys by electron beam or arc melting or sintering, or **in that**
b) Nb powder already doped with P is sintered,
and **in that** a wire whose phosphorus content is from 50 to 2000 µg/g is drawn from the material obtained.

3. Process according to Claim 2, wherein the drawn wire has a diameter of 0.2 to 0.4 mm.

4. Process according to Claim 2, wherein the drawing of the wire is effected at room temperature.

5. Use of niobium wire enriched with phosphorus, according to Claim 1, as a connecting wire of niobium or niobium oxide or tantalum capacitors.

## Revendications

1. Fil de niobium résistant aux températures élevées, **caractérisé en ce qu'**il est enrichi en phosphore, la teneur en phosphore étant de 50 à 2000 µg/g.

2. Procédé pour la préparation d'un fil de niobium résistant aux températures élevées enrichi en phosphore, **caractérisé en ce que**
a) on dope le niobium par addition de P ou de pré-alliages contenant P par fusion par bombardement d'électrons ou par arc électrique ou par frittage avec P, ou **en ce que**
b) on fritte une poudre de Nb déjà dopée avec P,
et **en ce que** l'on étire un fil à partir du matériau obtenu,
dont la teneur en phosphore est de 50 à 2000 µg/g.

3. Procédé selon la revendication 2, dans lequel le diamètre du filé tiré est compris entre 0,2 et 0,4 mm.

4. Procédé selon la revendication 2, dans lequel l'étirage du fil est réalisé à température ambiante.

5. Utilisation de fil de niobium enrichi en phosphore selon la revendication 1 comme fil de raccordement de condensateurs au niobium ou à l'oxyde de niobium ou au tantale.
